# EUROPEAN PATENT APPLICATION

(11) **EP 3 550 052 A1**
(43) Date of publication of application: **09.10.2019**
(21) Application number: 17877002.0
(22) Date of filing: 27.11.2017
(51) Int. Cl.: C22C 38/04, B32B 15/00

(54) **MARTENSITIC STAINLESS STEEL ROLLED COMPOSITE STEEL PLATE AND METHOD OF MANUFACTURING SAME**

(30) Priority: 30.11.2016 CN 201611083881
(71) Applicant: Baoshan Iron & Steel Co., Ltd., Shanghai 201900 (CN)
(72) Inventor: ZHANG, Aiwen, Shanghai 201900 (CN); DING, Jianhua, Shanghai 201900 (CN); JIAO, Sihai, Shanghai 201900 (CN)
(74) Representative: Lux, Berthold
(86) International application number: PCT/CN2017/113115
(87) International publication number: WO 2018/099347

(57) **Abstract**

A martensitic stainless steel clad-rolled steel plate comprises a base layer and a martensitic stainless steel clad layer clad-rolled on the base layer. The base layer comprises the following chemical elements in percentage by mass: C: 0.1-0.2%, 0<Si≤0.35%, Mn: 0.5-1.5%, Al: 0.02-0.04%, Ti: 0.005-0.018%, Nb: 0.005-0.020%, N: ≤0.006%, the remainder being iron and other unavoidable impurities. Correspondingly, a method of manufacturing the martensitic stainless steel clad-rolled steel plate described above is also disclosed. The base layer of the above-mentioned martensitic stainless steel clad-rolled steel plate has a yield strength of 235 MPa or more, an elongation rate of A50 of 18% or more, a Charpy impact energy Akv at 0°C of 100 J or more, and the martensitic stainless steel clad-rolled steel plate has a shear strength of 385 MPa or more.

## Description

### Technical field

The invention relates to a clad plate and a manufacturing method thereof, in particular to a clad-rolled steel plate and a manufacturing method thereof.

### Background art

As an important steel material, martensitic stainless clad-rolled steel plates have unique comprehensive performances that combine the corrosion resistance of stainless steel with the mechanical properties of carbon steel, which make the clad-rolled steel plates be widely used in industries such as metallurgy, mining machinery and hydropower station. With the rapid development of China's industry, the higher requirement for the service life of various military and civilian equipments, as well as the green environmental requirements for ultra-low carbon emissions during production and use, the performance requirements for clad plates have also increased.

In the prior art, clad steel plates are usually obtained by conventional mechanical cladding and explosion cladding. In the above two processes, the performance of the clad layer and the performance of the base layer are controlled separately and then the two layers are combined. That is, before the cladding, the stainless steel and the carbon steel can be respectively treated to a suitable state satisfying their required performance, and then the mechanical clad force or the explosive impact force is applied to combine the two steel materials into one to obtain a clad plate. However, these two clad methods each have their own shortcomings. For example, there is no complete metallurgical bond between the stainless steel clad layer and the carbon steel base layer of the clad plate obtained by mechanical cladding. The two layers are attached together only by mechanical force, which causes the clad interface to be easily cracked and peeled off during use, and the clad plate fails quickly. The shortcoming of explosion cladding is that the process method has strict requirements on the process environment, and it needs to be carried out in deep forests and old places where sparsely populated. In addition, noise, vibration and shock waves generated during the explosion have a great impact on the surrounding environment. In an era of increasing environmental awareness, this process is greatly limited by environmental factors. In addition, the clad interface of the clad plate produced by explosion cladding has low shear strength.

### Summary of the invention

One of the objects of the present invention is to provide a martensitic stainless steel clad-rolled steel plate having high hardness, good mechanical properties, and certain cold bending and forming properties.

In order to achieve the above object, the present invention provides a martensitic stainless steel clad-rolled steel plate, comprising a base layer and a martensitic stainless steel clad layer clad-rolled on the base layer; the base layer comprises the following chemical elements in percentage by mass:
C: 0.1-0.2%, 0<Si≤0.35%, Mn: 0.5-1.5%, Al: 0.02-0.04%, Ti: 0.005-0.018%, Nb: 0.005-0.020%, N: ≤0.006%, the balance being iron and other unavoidable impurities.

The martensitic stainless steel clad layer may use a martensitic stainless steel known to those skilled in the art, such as 30Cr13, 20Cr13, 40Cr13, and other types of martensitic stainless steel.

C: Carbon is an important alloying element in steel. The increase in carbon content can increase the strength and hardness of the steel plate. However, when the mass percentage of carbon is too high, the plasticity and toughness of the steel sheet will decrease, which affects the welding property of the steel plate. In the technical solutions of the present invention, considering the influence of carbon on the performance of base layer and avoiding the diffusion and migration of carbon from martensitic stainless steel clad layer to base layer during clad-rolling, the carbon content of the base layer is thus appropriately increased (i.e., the mass percentage of carbon is limited to 0.1-0.2%) to ensure high strength and hardness of the martensitic stainless steel clad-rolled steel plate.

Si: The addition of silicon in the steel can improve the purity of the steel. Moreover, silicon has a deoxidizing effect. In addition, silicon has the effect of solid solution strengthening in steel, while excessive silicon is disadvantageous to the welding property. Since the martensitic stainless steel clad layer also contains silicon, in the base layer, the mass percentage of silicon is limited to 0<Si≤0.35%, which is beneficial to reduce the influence of silicon on the corrosion resistance of the martensitic stainless steel clad layer, and also to ensure good welding property of the base layer.

Mn: In the technical solutions of the present invention, manganese can strengthen the steel, increase the hardenability of the steel, and lower the critical cooling rate of martensite formation. In addition, manganese is beneficial for increasing the strength grade of steel. Since excess manganese has a high segregation tendency, the mass percentage of manganese in the base layer of the martensitic stainless steel clad-rolled steel plate according to the present invention is limited to 0.5-1.5%.

In order to further improve the martensitic stainless steel clad-rolled steel plate according to the present invention, the manganese in the martensitic stainless steel clad-rolled steel plate according to the present invention has a more preferable range of 0.8-1.2%.

Al: In the technical solutions of the present invention, aluminum is a strong deoxidizing element for reducing the mass percentage of oxygen in the steel. The deoxidized aluminum forms AIN precipitates with nitrogen, which is beneficial to increase the strength of the steel and to refine the grains. Therefore, in the technical solutions of the present invention, the mass percentage of aluminum is controlled to 0.02-0.04%.

Ti: Titanium is a strong carbide forming element. The addition of a small amount of titanium in the steel is advantageous for fixing the N in the steel, and the formed TiN can prevent grains from excessively growing and refine the grains. In addition, titanium may also form TiC, TiS, Ti₄C₂S₂ with carbon and sulfur in the steel, respectively, and the above compounds exist in the form of inclusions and second phase particles. The above carbonitride precipitates of titanium can also prevent the grain growth in heat-affected zone during welding and improve welding performance. Therefore, in the base layer of the martensitic stainless steel clad-rolled steel plate according to the present invention, the mass percentage of Ti is controlled to 0.005-0.018%.

Nb: Niobium is a strong carbide forming element. The addition of niobium in the base layer is advantageous for increasing the recrystallization temperature, thereby refining the crystal grains, and is advantageous for improving the low temperature impact toughness of the base layer. Therefore, in the base layer of the martensitic stainless steel clad-rolled steel plate according to the present invention, the mass percentage of niobium is controlled to 0.005-0.020%.

N: Nitrogen is an austenite stabilizing element. The nitrogen in the base layer is the residual of the elements of the steelmaking gas. Therefore, in the martensitic stainless steel clad-rolled steel plate according to the present invention, the mass percentage of nitrogen is controlled to 0.006% or less.

In the martensitic stainless steel clad-rolled steel plate according to the present invention, the unavoidable impurities are mainly sulfur and phosphorus, and therefore it is necessary to control the phosphorus in the base layer to 0.015% or less, and the sulfur to 0.010% or less.

Further, in the martensitic stainless steel clad-rolled steel plate according to the present invention, the base plate further contains at least one of Ni, Cr, and Mo elements, wherein Ni≤0.20%, Cr≤0.20%, and Mo≤0.10%.

In order to further improve the effect of the martensitic stainless steel clad-rolled steel plate according to the present invention, at least one of Ni, Cr and Mo elements may be added for the following reasons:
Ni: The addition of nickel to the martensitic stainless steel clad-rolled steel plate according to the present invention is advantageous for stabilizing austenite and increasing the strength of the steel. The addition of nickel to steel can significantly increase the low temperature impact toughness of the steel. However, since nickel is a precious alloying element, excessive addition will increase production costs. For martensitic stainless steel clad-rolled steel plates, adding an appropriate amount of Ni is beneficial to increase the low temperature impact toughness of the base layer. Therefore, in the martensitic stainless steel clad-rolled steel plate according to the present invention, the mass percentage of Ni is controlled to 0.20% or less.

Cr: Because the segregation tendency of chromium is smaller than that of manganese, when there are clear segregation band and banded structure in the steel of base layer, chromium is added to improve the performance of the steel. In addition, the addition of chromium to the base layer is also beneficial for inhibiting the diffusion of chromium from the martensitic stainless steel clad layer to the base layer. In view of this, in the martensitic stainless steel clad-rolled steel plate according to the present invention, the mass percentage of Cr is controlled to 0.20% or less.

Mo: Molybdenum facilitates grain refinement and improves the strength and toughness of steel. In addition, molybdenum can reduce the brittleness of the tempered steel, causing very fine carbides to precipitate during tempering, which strengthens the matrix of the base layer of the steel. In addition, the addition of molybdenum is advantageous for suppressing the self-temper brittleness of the martensitic stainless steel clad-rolled steel plate. Therefore, in the martensitic stainless steel clad-rolled steel plate according to the present invention, the mass percentage of molybdenum is controlled to 0.10% or less.

Further, in the martensitic stainless steel clad-rolled steel plate according to the present invention, the microstructure of the martensitic stainless steel clad layer is all martensite, or martensite + a small amount of carbide, wherein the ratio of the carbide phase is not more than 2%.

Further, in the martensitic stainless steel clad-rolled steel plate according to the present invention, the microstructure of the base layer is ferrite + pearlite.

Further, in the martensitic stainless steel clad-rolled steel plate according to the present invention, there is a transition layer at the junction position of the base layer and the martensitic stainless steel clad layer, wherein the transition layer has a thickness of 200 µm or less.

In the martensitic stainless steel clad-rolled steel plate according to the present invention, since the mass percentage of each element in the base layer and the martensitic stainless steel clad layer is different, the element diffuses from the side with the high mass percentage to the side with the lower mass percentage, so that the mass percentage of the elements at the junction position is distributed in a gradient to form a transition layer.

Further, in the martensitic stainless steel clad-rolled steel plate according to the present invention, the microstructure of the transition layer is ferrite + carbide.

Further, in the martensitic stainless steel clad-rolled steel plate according to the present invention, the base layer has a yield strength of 235 MPa or more, an elongation A50 of 18% or more, and a Charpy impact energy Akv at 0 °C of 100 J or more, and the martensitic stainless steel clad-rolled steel plate has a shear strength of 385 MPa or more.

Accordingly, another object of the present invention is to provide a method of manufacturing the above-described martensitic stainless steel clad-rolled steel plate. The martensitic stainless steel clad-rolled steel plate manufactured by the method has high strength, certain cold bending and forming properties.

In order to achieve the above object, the present invention also provides a manufacturing method for the above-described martensitic stainless steel clad-rolled steel plate, comprising the steps of:
(1) providing base slabs and stainless clad slabs;
(2) assembling at least one layer of the base slabs and at least one layer of the clad slabs;
(3) clad rolling: an assembled slab is first heated at a temperature of 1100-1180 °C, and then subjected to multi-pass rolling, wherein the total reduction rate is not less than 70%, and the finishing rolling temperature is not lower than 900 °C;
(4) hot levelling the clad-rolled steel plate;
(5) the clad-rolled steel plate is transferred to a cooling bed for air cooling in a state of a single sheet, and after leaving the cooling bed, is left until the final cooling temperature of a single sheet reaches 80 °C or lower to complete the martensitic transformation.

In the manufacturing method of the present invention, by clad rolling base slabs and stainless clad slabs, the martensitic stainless steel clad-rolled steel plate obtained after rolling has both good mechanical properties and good welding performance.

In order to improve the clad effect, before the base slab and the clad slab are assembled, the surfaces to be cladded in the base slab and the clad slab are pretreated to remove the oxides on the surfaces to be cladded. In the manufacturing method of the present invention, those skilled in the art can adjust the number of the layers assembled according to specific conditions of each embodiment. For example, the assembled slab may have two layers, wherein one layer is a base slab and the other layer is a clad slab. Alternatively, the assembled slab may have four layers, two layers are base slabs, and the other two layers are clad slabs, wherein the two martensitic stainless steel clad slabs are cladded on the upper and lower surfaces of the assembled slab, and the base slabs are located in the middle of the assembled slab. In some preferred embodiments, a layer of separator is disposed between two layers of base slabs. Further, in other preferred embodiments, the bonding interface of the base layer and the clad layer is evacuated.

In order to ensure that the martensite transformation in the martensitic stainless steel clad layer is sufficient to obtain a high hardness of the martensitic stainless steel plate of the present invention, in the step (5), single sheet steel plates are not allowed to be stacked until the final cooling temperature of the single sheets is 80 °C or lower.

Further, it should be noted that in order to prevent cracking of the martensitic stainless steel clad layer, the clad-rolled steel plate obtained in the step (5) cannot be subjected to cold correction, but may be flattened. In addition, when flattening, the clad-rolled steel plate having a large number of slab layers may be separated into sub-plates in the thickness direction and then flattened to improve the flattening effect. For example, for an assembled slab having four layers, the assembled slab may be trimming separated into two clad sub-plates in the thickness direction before flattening and then flattened to improve the flattening effect.

Further, in the manufacturing method according to the present invention, in the step (4), the stop temperature of the hot levelling is 550 °C or higher.

Further, in the manufacturing method according to the present invention, in the step (3), the finishing rolling temperature is 920-1000 °C.

In the martensitic stainless steel clad-rolled steel plate of the present invention, by optimizing the compositions and controlling the process parameters, the base layer of the martensitic stainless steel clad-rolled steel plate has a yield strength of 235 MPa or more, an elongation A50 of 18% or more, and a Charpy impact energy Akv at 0 °C of 100 J or more, and the martensitic stainless steel clad-rolled steel plate has a shear strength of 385 MPa or more.

In addition, by clad rolling the base slab and the clad slab, the manufacturing method of the present invention allows the clad-rolled steel plate to have good mechanical properties, high hardness, and certain cold bending and forming properties.

### Brief Description of the Drawings

Figure 1 shows the metallographic structure of the base layer of the martensitic stainless steel clad-rolled steel plate of Example 2.
Figure 2 shows the metallographic structure of the clad layer of the martensitic stainless steel clad-rolled steel plate of Example 2.
Figure 3 shows the metallographic structure of the transition layer of the martensitic stainless steel clad-rolled steel plate of Example 3.
Figure 4 shows the magnified metallographic structure of the transition layer of the martensitic stainless steel clad-rolled steel plate of Example 3.

### Detailed Description

The martensitic stainless steel clad-rolled steel plate and manufacturing method thereof of the present invention will be further explained and illustrated below with reference to the accompanying drawings and specific Examples. However, the explanations and illustrations do not unduly limit the technical solutions of the present invention.

### Examples 1-9

Table 1 lists the mass percentages of the chemical elements of each slab layer of the martensitic stainless steel clad-rolled steel plates in Examples 1-9.

**Table 1 (wt%, the balance is Fe and other inevitable impurities other than P and S)**

| Example | Slab layer | C | Si | Mn | P | S | Al | Ti | Nb | Ni | Cr | Mo | N |
|---|---|---|---|---|---|---|---|---|---|---|---|---|---|
| 1 | clad layer | Using 30Cr13 | | | | | | | | | | | |
| | base plate | 0.1 | 0.35 | 1.5 | 0.01 | 0.005 | 0.04 | 0.018 | 0.02 | - | - | 0.1 | 0.0045 |
| 2 | clad layer | Using 30Cr13 | | | | | | | | | | | |
| | base plate | 0.14 | 0.25 | 1 | 0.01 | 0.005 | 0.03 | 0.014 | 0.011 | - | 0.2 | - | 0.0052 |
| 3 | clad layer | Using 30Cr13 | | | | | | | | | | | |
| | base plate | 0.2 | 0.15 | 0.5 | 0.008 | 0.004 | 0.02 | 0.005 | 0.005 | - | - | - | 0.004 |
| 4 | clad layer | Using 20Cr13 | | | | | | | | | | | |
| | base plate | 0.11 | 0.3 | 1.48 | 0.008 | 0.005 | 0.026 | 0.008 | 0.008 | 0.1 | - | - | 0.0038 |
| 5 | clad layer | Using 20Cr13 | | | | | | | | | | | |
| | base plate | 0.12 | 0.25 | 1 | 0.009 | 0.006 | 0.035 | 0.013 | 0.007 | - | - | - | 0.0044 |
| 6 | clad layer | Using 20Cr13 | | | | | | | | | | | |
| | base plate | 0.18 | 0.22 | 1.25 | 0.01 | 0.005 | 0.026 | 0.015 | 0.006 | - | - | - | 0.004 |
| 7 | clad layer | Using 40Cr13 | | | | | | | | | | | |
| | base plate | 0.12 | 0.3 | 1.45 | 0.009 | 0.006 | 0.03 | 0.011 | 0.008 | - | - | - | 0.0048 |
| 8 | clad layer | Using 40Cr13 | | | | | | | | | | | |
| | base plate | 0.14 | 0.25 | 1.5 | 0.01 | 0.006 | 0.029 | 0.012 | 0.01 | - | - | - | 0.0046 |
| 9 | clad layer | Using 40Cr13 | | | | | | | | | | | |
| | base plate | 0.16 | 0.2 | 1.48 | 0.009 | 0.005 | 0.028 | 0.015 | 0.006 | 0.2 | - | - | 0.0039 |

The manufacturing method for the martensitic stainless steel clad-rolled steel plates of Examples 1-9 comprises the following steps (see Table 2 for specific process parameters of each Example):
(1) providing base slabs and stainless clad slabs according to the mass percentages of each slab layer listed in Table 1;
(2) assembling at least one layer of the base slabs and at least one layer of the clad slabs;
(3) clad rolling: an assembled slab is first heated at a temperature of 1100-1180 °C, and then subjected to multi-pass rolling, wherein the finishing rolling temperature is not lower than 900 °C;
(4) hot levelling the clad-rolled steel plate: stop temperature of the hot levelling is 550 °C or higher;
(5) the clad-rolled steel plate is transferred to a cooling bed for air cooling in a state of a single sheet, and after leaving the cooling bed, is left until the final cooling temperature of a single sheet reaches 80 °C or lower to complete the martensitic transformation.

It should be noted that the base slabs formed base layers of the martensitic stainless steel clad-rolled steel plates of the Examples, and the stainless clad slabs formed martensitic stainless steel clad layers of the martensitic stainless steel clad-rolled steel plate of the Examples.

Table 2 lists the specific process parameters in the manufacturing method for the martensitic stainless steel clad-rolled steel plates of Examples 1-9.

**Table 2**

| Example | Slab structure | Heating temperature (°C) | Finishing temperature (°C) | Stop temperature of the hot levelling (°C) | Final cooling temperature (°C) | Base plate microstructure | Clad layer microstructure | Transition layer microstructure |
|---|---|---|---|---|---|---|---|---|
| 1 | Clad layer + Base plate | 1150 | 980 | 600 | 55 | Ferrite + Pearlite | Martensite | Ferrite + Carbide |
| 2 | Clad layer + Base plate | 1160 | 1000 | 655 | 65 | Ferrite + Pearlite | Martensite | Ferrite + Carbide |
| 3 | Clad layer + Base plate | 1140 | 990 | 550 | 80 | Ferrite + Pearlite | Martensite | Ferrite + Carbide |
| 4 | Clad layer + Base plate + Base plate + Clad layer | 1180 | 980 | 580 | 75 | Ferrite + Pearlite | Martensite | Ferrite + Carbide |
| 5 | Clad layer + Base plate + Base plate + Clad layer | 1150 | 950 | 560 | 75 | Ferrite + Pearlite | Martensite | Ferrite + Carbide |
| 6 | Clad layer + Base plate + Base plate + Clad layer | 1100 | 920 | 570 | 60 | Ferrite + Pearlite | Martensite | Ferrite + Carbide |
| 7 | Clad layer + Base plate | 1180 | 1000 | 590 | 65 | Ferrite + Pearlite | Martensite | Ferrite + Carbide |
| 8 | Clad layer + Base plate | 1170 | 995 | 620 | 75 | Ferrite + Pearlite | Martensite | Ferrite + Carbide |
| 9 | Clad layer + Base plate | 1160 | 985 | 610 | 80 | Ferrite + Pearlite | Martensite | Ferrite + Carbide |

Table 3 lists the test results of the martensitic stainless steel clad-rolled steel plates of Examples 1-9 after various performance tests.

**Table 3**

| Example | Clad layer hardness (HRC) | Base layer hardness (HB) | Base layer yield strength (MPa) | Elongation A₅₀ (%) | Charpy impact energy Akv at 0 °C (J) | Shear strength (MPa) | Inner bending performance test (inner bend d=6a, 20°) |
|---|---|---|---|---|---|---|---|
| 1 | 58 | 134 | 295 | 22 | 125 | 445 | Qualified |
| 2 | 57 | 135 | 290 | 21 | 135 | 425 | Qualified |
| 3 | 55 | 115 | 235 | 20 | 115 | 400 | Qualified |
| 4 | 51 | 115 | 245 | 22 | 125 | 405 | Qualified |
| 5 | 50 | 118 | 255 | 24 | 125 | 395 | Qualified |
| 6 | 48 | 119 | 260 | 23 | 110 | 385 | Qualified |
| 7 | 63 | 125 | 275 | 22 | 115 | 400 | Qualified |
| 8 | 62 | 118 | 265 | 21 | 120 | 415 | Qualified |
| 9 | 62 | 118 | 280 | 25 | 115 | 455 | Qualified |

It can be seen from Table 3 that the base layer of each Example has a yield strength of 235 MPa or more and a hardness higher than 110 HB, the shear strength of the martensitic stainless steel clad-rolled steel plate is 385 MPa or more, and the hardness of the martensitic stainless steel clad layer is higher than 48 HRC, indicating that the mechanical properties of the Examples are good. Further, each Example has an elongation A50 of 18% or more and a Charpy impact energy Akv at 0 °C of 100 J or more, indicating that the base steel plates of Examples 1-9 of the present invention have excellent toughness. Moreover, the results of the inner bending performance test of the clad layer on the inner side show that the Examples of the present invention have cold bending and forming properties.

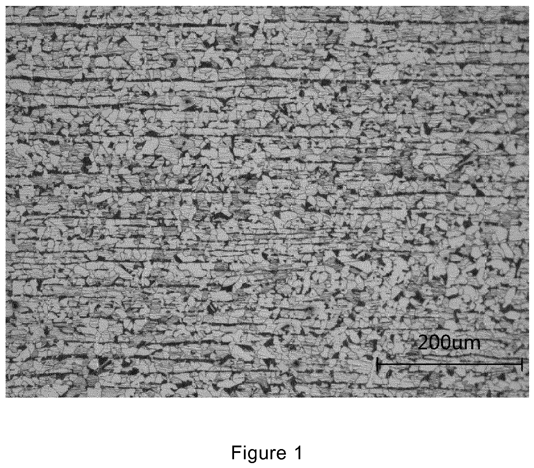

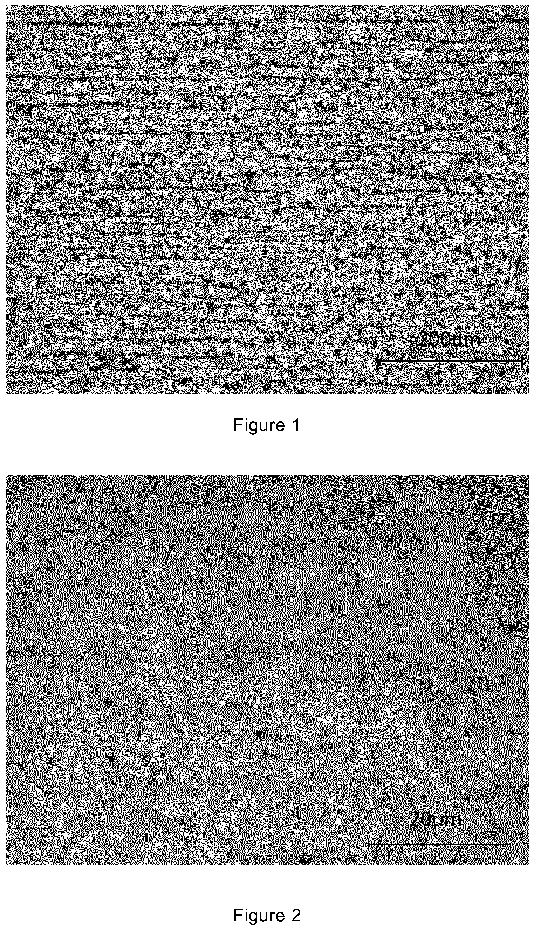

Figure 1 shows the metallographic structure of the base layer of the martensitic stainless steel clad-rolled steel plate of Example 2. As can be seen from Figure 1, the microstructure of the base layer of Example 2 is ferrite + pearlite.

Figure 2 shows the metallographic structure of the clad layer of the martensitic stainless steel clad-rolled steel plate of Example 2. As can be seen from Figure 2, the microstructure of the martensitic stainless steel clad layer of Example 2 is martensite.

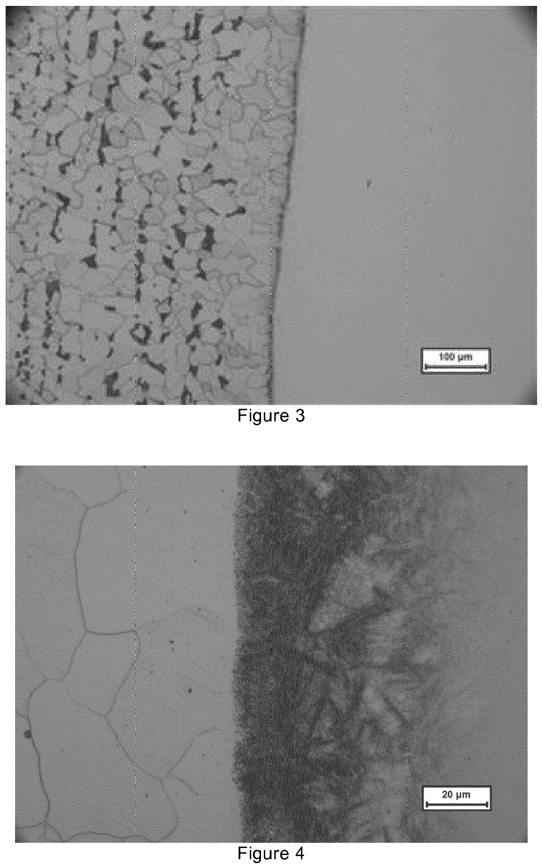

Figure 3 shows the metallographic structure of the transition layer of the martensitic stainless steel clad-rolled steel plate of Example 3. As can be seen from Figure 3, there is a transition layer at the junction position of the base layer and the martensitic stainless steel clad layer in Example 3, wherein the transition layer has a thickness of 200 µm or less.

Figure 4 shows the magnified metallographic structure of the transition layer of the martensitic stainless steel clad-rolled steel plate of Example 3. As can be seen from Figure 4, the microstructure of the transition layer of Example 3 is ferrite + carbide.

It should be noted that the above are merely illustrative of specific Examples of the invention. It is obvious that the present invention is not limited to the above Examples, but has many similar variations. All modifications that are directly derived or associated by those skilled in the art are intended to be within the scope of the present invention.

## Claims

1. A martensitic stainless steel clad-rolled steel plate, comprising a base layer and a martensitic stainless steel clad layer clad-rolled on the base layer, wherein the base layer comprises the following chemical elements in percentage by mass:
C: 0.1-0.2%, 0<Si≤0.35%, Mn: 0.5-1.5%, Al: 0.02-0.04%, Ti: 0.005-0.018%, Nb: 0.005-0.020%, N: ≤0.006%, the balance being iron and other unavoidable impurities.

2. The martensitic stainless steel clad-rolled steel plate according to claim 1, wherein, the base layer further contains at least one of Ni, Cr, and Mo elements, wherein Ni≤0.20%, Cr≤0.20%, and Mo≤0.10%.

3. The martensitic stainless steel clad-rolled steel plate according to claim 1, wherein, microstructure of the martensitic stainless steel clad layer is all martensite or martensite + a small amount of carbide, wherein the ratio of a carbide phase is not more than 2%.

4. The martensitic stainless steel clad-rolled steel plate according to claim 1, wherein, microstructure of the base layer is ferrite + pearlite.

5. The martensitic stainless steel clad-rolled steel plate according to claim 1, wherein, there is a transition layer at the junction position of the base layer and the martensitic stainless steel clad layer, and the transition layer has a thickness of 200 µm or less.

6. The martensitic stainless steel clad-rolled steel plate according to claim 5, wherein, microstructure of the transition layer is ferrite + carbide.

7. The martensitic stainless steel clad-rolled steel plate according to any one of claims 1-6, wherein, the base layer has a yield strength of 235 MPa or more, an elongation A50 of 18% or more, and a Charpy impact energy Akv at 0 °C of 100 J or more, and the martensitic stainless steel clad-rolled steel plate has a shear strength of 385 MPa or more.

8. A manufacturing method for the martensitic stainless steel clad-rolled steel plate of any one of claims 1-7, comprising the steps of:
(1) providing base slabs and stainless clad slabs;
(2) assembling at least one layer of the base slabs and at least one layer of the clad slabs;
(3) clad rolling: an assembled slab is first heated at a temperature of 1100-1180 °C, and then subjected to multi-pass rolling, wherein a finishing rolling temperature is not lower than 900 °C;
(4) hot-levelling an clad-rolled plate;
(5) the clad-rolled plate is transferred to a cooling bed for air cooling in a state of a single sheet, and after leaving the cooling bed, is left until a final cooling temperature of a single sheet reaches 80 °C or lower to complete martensitic transformation.

9. The manufacturing method according to claim 8, wherein, in the step (4), stop temperature of the hot-levelling is 550 °C or higher.

10. The manufacturing method according to claim 8, wherein, in the step (3), finishing rolling temperature is 920-1000 °C.
